# EUROPEAN PATENT APPLICATION

(11) **EP 4 541 662 A1**
(43) Date of publication of application: **23.04.2025**
(21) Application number: 23849535.2
(22) Date of filing: 04.08.2023
(51) Int. Cl.: B60R 11/04

(54) **SUPPORT FOR FIXING COMPONENT ONTO SURFACE OF GLASS AND WINDSHIELD**

(30) Priority: 05.08.2022 CN 202210935267; 08.11.2022 CN 202211389112
(71) Applicant: Fujian Wanda Automobile Glass Industry Co., Ltd., Fuqing Fuzhou, Fujian 350300 (CN)
(72) Inventor: ZHAN, Wei, Fuzhou, Fujian 350300 (CN); CHEN, Lishan, Fuzhou, Fujian 350300 (CN); YE, Qigui, Fuzhou, Fujian 350300 (CN); LIN, Xinyuan, Fuzhou, Fujian 350300 (CN); LIAN, Jinyang, Fuzhou, Fujian 350300 (CN)
(74) Representative: Inchingalo, Simona
(86) International application number: PCT/CN2023/111286
(87) International publication number: WO 2024/027831

(57) **Abstract**

The present application relates to a support (1) for fixing a component (2) on the surface of glass, and a windshield, the component (2) being provided with a first fixing part (21) and a second fixing part (22) for fixation. The support (1) comprises: a bottom plate (3), one surface of the bottom plate (3) being used for connecting to the surface of glass; a limiting structure (4), the limiting structure (4) comprising a snapping recess (41), and the snapping recess (41) enabling the first fixing part (21), after rotating by a certain angle, to be snapped into the snapping recess (41); a stopper (5), one end of the stopper (5) extending towards the side facing away from the glass and being used for abutting against the surface of the component (2); and a snap-fit member (6), when the snap-fit member (6) is snapped-fit to the second fixing part (22), the direction of at least one component force applied to the second fixing part (22) being opposite to the direction of at least one component force applied to the component (2) by the stopper (5).

## Description

### CROSS-REFERENCE TO RELATED APPLICATIONS

The application claims priority to Chinese patent application No. 2022109352674, entitled "BRACKET FOR FIXING COMPONENT TO SURFACE OF GLASS AND WINDSHIELD", filed on August 5, 2022, and Chinese patent application No. 2022113891121, entitled "OPTICAL COMPONENT BRACKET ASSEMBLY", filed on November 8, 2022. The contents of the above identified applications are hereby incorporated herein in their entireties by reference.

### TECHNICAL FIELD

The present application relates to the technical field of fixing brackets.

### BACKGROUND

In recent years, with the popularization of smart devices, various electrical components are mounted to vehicles to improve the user's driving experience, and there are requirements for fixing components to glasses, such as fixing optical sensing components or other sensing components to windshields, side window glasses, and sunroof glasses. Since surfaces of the glass are smooth, various components generally cannot be directly fixed to the glass. Therefore, a bracket that can be fixed to the surface of the glass by adhesive or other means is required to assist such components to be fixed to the glass.

According to the bracket for fixing components on the surface of the glass, an upper portion of the bracket is generally adjacent to a roof of the vehicle, which results in a small space for mounting components when the components are mounted on the bracket, and the mounting is inconvenient. In addition, in case of uneven force during mounting, it is prone to skew, that is, one side of the component is mounted in place, while the other side of the component is not completely clamped.

### SUMMARY

According to various embodiments of the present application, a bracket for fixing a component to a surface of a glass and a windshield are provided.

The technical solutions are described in the following.

In one aspect, the present application relates to a bracket for fixing a component to a surface of a glass, the component is provided with a first fixing portion and a second fixing portion for fixing, the bracket includes a bottom plate, a limiting structure, a stopping member, and an engaging member. A surface of the bottom plate is configured to be connected to a surface of a glass. The limiting structure is provided on a surface of the bottom plate away from the glass, the limiting structure is provided with an engaging groove, and the first fixing portion is engaged into the engaging groove after being rotated by a certain angle. One end of the stopping member is connected to the bottom plate, and the other end of the stopping member extends toward a side away from the glass and is configured to abut against a surface of the component. The engaging member is provided on the surface of the bottom plate away from the glass, the engaging member is engaged with the second fixing portion, and a direction of at least one component force exerted on the second fixing portion by the engaging member after being engaged with the second fixing portion is opposite to a direction of at least one component force exerted on the component by the stopping member.

The technical solutions are further described in the following.

In one of the embodiments, the limiting structure further includes a limiting base and a suspending arm, one end of the suspending arm is fixedly connected to the bottom plate, the other end of the suspending arm is located above the engaging groove, and the engaging groove is formed between the limiting base and the suspending arm.

In one of the embodiments, the engaging groove includes a pre-locking groove configured to enable the first fixing portion to enter between the suspending arm and the limiting base at a constant angle, the engaging groove further includes a fixing groove configured to enable the first fixing portion to rotate by a certain angle, the pre-locking groove and the fixing groove are in communication with each other, an end of the suspending arm located above the engaging groove is a supporting end protruding toward the engaging groove, the limiting base includes a pre-locking inclined surface and a curved surface, the pre-locking groove is located between the supporting end and the pre-locking inclined surface, and the fixing groove is located between the supporting end and the curved surface.

In one of the embodiments, the first fixing portion rotates in the engaging groove by an angle range of ε, and 20° ≤ ε ≤ 80°, 10° ≤ ε ≤ 50°, 30° ≤ ε ≤ 60°, or 15° ≤ ε ≤ 25°.

In one of the embodiments, the stopping member is an elastic sheet.

In one of the embodiments, a reinforcing rib is provided at a connecting position between the stopping member and the bottom plate.

In one of the embodiments, the engaging member includes a supporting portion and an engaging portion, the supporting portion is connected to the bottom plate, the engaging portion is provided at an end of the supporting portion away from the bottom plate, when the component is not connected to the bracket, an angle formed between the supporting portion and the bottom plate is α, and 70° ≤ α ≤ 100°, or 80° ≤ α ≤ 90°.

In one of the embodiments, the supporting portion has at least two swing axes, and at least two swing axes are parallel to each other or form an acute angle of less than 90° with each other.

In one of the embodiments, the supporting portion is pressed to swing by an angle of θ, and 5° ≤ θ ≤ 30°, or 10° ≤ θ ≤ 20°.

In one of the embodiments, the engaging member further includes an engaging member root portion, the supporting portion is fixedly connected to the bottom plate through the engaging member root portion, an angle formed between the engaging member root portion and the bottom plate is γ, and 130° ≤ γ ≤180°, or 140°≤ γ ≤150°.

In one of the embodiments, the engaging portion includes a contacting surface, the contacting surface is in contact with the second fixing portion and exerts pressure on the second fixing portion, an angle formed between the contacting surface and the bottom plate is β, and 0° ≤ β ≤ 50°, or 20° ≤ β ≤ 40°.

In one of the embodiments, the engaging portion further includes a first inclined surface and a second inclined surface that are sequentially connected, during an engagement of the engaging member with the second fixing portion, the first inclined surface comes into contact with the engaging portion before the second inclined surface comes into contact with the engaging portion, the first inclined surface has an inclination angle δ with respect to the second inclined surface, and 0° ≤ δ ≤ 40° or 20° ≤ δ ≤ 30°.

In one of the embodiments, the component is further provided with a signal transceiver;
the bottom plate is provided with a signal passage port, and the signal transceiver points to the signal passage port;
the bracket further includes a light shielding cover, the light shielding cover is connected to the bottom plate and covers the signal passage port and the signal transceiver, and one end of the light shielding cover adjacent to the signal transceiver is located between the component and the bottom plate.

In one of the embodiments, the bottom plate is provided with a fool-proof member on a surface thereof away from the glass, the stopping member and the engaging member are located between the fool-proof member and the limiting structure, and when the first fixing portion is not engaged in the engaging groove, the fool-proof member limits the component from rotating, so that the second fixing portion is unable to be engaged with the engaging member.

In one of the embodiments, one end of the fool-proof member is fixedly connected to the bottom plate, the other end of the fool-proof member is provided with a supporting inclined surface, and the supporting inclined surface is inclined from one end thereof away from the component to an end thereof adjacent to the component.

In one of the embodiments, the light shielding cover is provided with a third fixing portion and a fourth fixing portion that are configure to be fixed to the bracket, the limiting structure is provided with a sliding groove located on a side of the even limiting structure adjacent to the signal passage port, the third fixing portion of the light shielding cover is capable of being inserted into the sliding groove, and the bottom plate is provided with a buckling structure configure to fix the fourth fixing portion.

In one of the embodiments, the buckling structure includes a buckling suspended arm, a gap is provided between the buckling suspended arm and the bottom plate, the fourth fixing portion extends from an edge of the light shielding cover toward the gap and extends through the gap, an end of the fourth fixing portion extending through the gap is provided with an engaging protrusion, and the engaging protrusion is engaged with an edge of the buckling suspended arm.

In one of the embodiments, the limiting structure further includes a pre-locking guide platform located at an entrance of the engaging groove, and a step-like drop is formed between an end of the pre-locking guide platform adjacent to the entrance of the engaging groove and a limiting base.

In one of the embodiments, a side of the pre-locking guide platform is provided with a limiting side wall, and the limiting side wall is capable of facilitating the first fixing portion to enter the engaging groove.

In another aspect, the present application further relates to a windshield, which includes the bracket for fixing the component to the surface of the glass in any of the foregoing embodiments.

### BRIEF DESCRIPTION OF THE DRAWINGS

In order to provide a clearer description of the technical solution in the embodiments of the present application or conventional technology, a brief introduction is given below to the accompanying drawings used in the description of the embodiments or conventional technology, obviously, the drawings in the following description are merely some embodiments of the application. For those of ordinary skill in the art, other drawings can also be obtained based on these drawings without involving any inventive effort.
FIG. 1 is a schematic structural diagram illustrating that a bracket and a component are assembled according to an embodiment of the present application.
FIG. 2 is an exploded view showing a separation of the bracket and the component in the embodiment shown in FIG. 1
FIG. 3 is a side view of the bracket in the embodiment shown in FIG. 1.
FIG. 4 is a schematic structural diagram of a limiting structure in the embodiment shown in FIG. 1.
FIG. 5 is a schematic structural diagram illustrating that a bracket and a component assembled according to another embodiment of the present application.
FIG. 6 is an exploded view showing a separation of the bracket and the component in the embodiment shown in FIG. 5.
FIG. 7 is a schematic structural diagram of the bracket in the embodiment shown in FIG. 5.
FIG. 8 is a side view of the bracket in the embodiment shown in FIG. 5.
FIG. 9 is a schematic structural diagram of a limiting structure in the embodiment shown in FIG. 5.
FIG. 10 is a first schematic structural diagram of an engaging member according to some embodiments of the present application.
FIG. 11 is a second schematic structural diagram of an engaging member according to some embodiments of the present application.
FIG. 12 is a third schematic structural diagram of an engaging member according to some embodiments of the present application.

### Description of reference signs:

1. Bracket; 2. Component; 21. First fixing portion; 22. Second fixing portion; 23. Signal transceiver; 3. Bottom plate; 31. Fool-proof member; 311. Supporting inclined surface; 32. Buckling structure; 321. Buckling suspended arm; 322. Column; 34. Signal passage port; 4. Limiting structure; 41. Engaging groove; 411. Pre-locking groove; 412. Fixing groove; 42. Limiting base; 421. Pre-locking inclined surface; 422. Curved surface; 423. Pre-locking guide platform; 424. Limiting side wall; 43. Suspending arm; 431. Supporting end; 44. Sliding groove; 5. Stopping member; 51. Reinforcing rib; 6. Engaging member; 61. Supporting portion; 62. Engaging portion; 621. Contacting surface; 622. First inclined surface; 623. Second inclined surface; 63. Engaging member root portion; 64. Swing axis; 7. Light shielding cover; 71. Third fixing portion; 72. Fourth fixing portion; 721. Engaging protrusion; 73. Flange.

### DETAILED DESCRIPTION OF THE EMBODIMENTS

The technical solution in the embodiment of the present application will be clearly and completely described below in conjunction with the drawings in the embodiments of the application. Apparently, the described embodiments are only some rather than all of the embodiments of the application. Based on the embodiments in the present application, all other embodiments obtained by a person skilled in the art without creative efforts shall all fall within the protection scope of the present application.

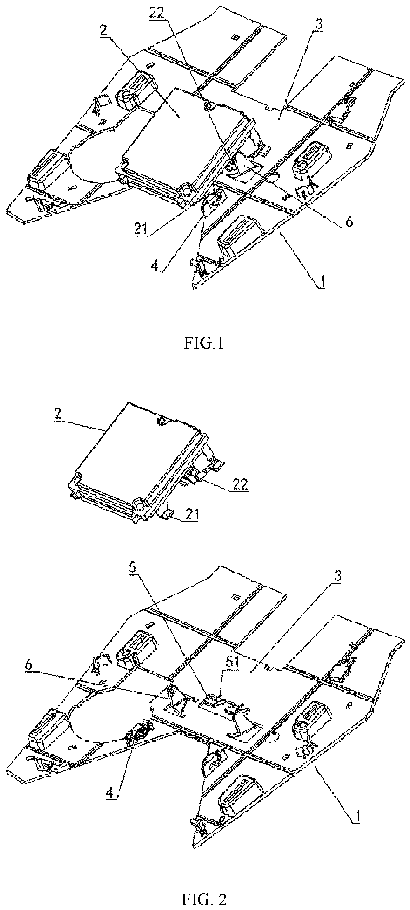

Referring to FIG. 1 and FIG. 2, in some embodiments of the present application, a bracket 1 for fixing a component 2 on a surface of a glass is provided. The component 2 is provided with a first fixing portion 21 and a second fixing portion 22 for fixing, and the bracket 1 includes:
a bottom plate 3, a surface of the bottom plate 3 being configured to be connected to the surface of the glass;
a limiting structure 4 provided on a surface of the bottom plate 3 away from the glass, the limiting structure 4 being provided with an engaging groove 41, and the first fixing portion 21 being engaged into the engaging groove 41 after being rotated by a certain angle;
a stopping member 5, one end of the stopping member 5 being connected to the bottom plate 3, and the other end of the stopping member 5 extending toward a side away from the glass and being configured to abut against a surface of the component 2; and
an engaging member 6 provided on the surface of the bottom plate 3 away from the glass, the engaging member 6 being engaged with the second fixing portion 22, and a direction of at least one component force exerted on the second fixing portion 22 by the engaging member 6 after being engaged with the second fixing portion 22 is opposite to a direction of at least one component force exerted on the component 2 by the stopping member 5.

The glass may specifically be an automobile glass, such as a front windshield or a rear windshield. The bracket 1 is fixed to an inner surface of the automobile glass, and the inner surface is a surface of the automobile glass adjacent to an inner side of a vehicle body after being mounted to the vehicle body. The component 2 may specifically be a sensing component 2 or another component 2 that needs to be mounted on the surface of the glass, such as an optical component like a sensing optical component, such as a camera, a laser radar, an ADAS sensor, a video recording device, etc. In addition, the component 2 may also be a rearview mirror, an electronic toll collection sensor, etc. In a specific embodiment, the component 2 is specifically a camera, and the camera is mounted to a top portion of a front windshield through the bracket assembly 1. The first fixing portion 21 of the component 2 is specifically a block-shaped structure protruding outwardly, and the second fixing portion 22 is specifically a block-shaped structure protruding outwardly or a groove-shaped structure recessed inwardly. At least two first fixing portions 21 are provided and arranged on opposite sides of the component 2, respectively. In some embodiments, two first fixing portions 21 are provided and symmetrically arranged on two sides of the component 2. At least two second fixing portions 22 are provided and arranged on opposite sides of the component 2. In some embodiments, two second fixing portions 22 are provided and symmetrically arranged on two sides of the component 2.

The side of the bottom plate 3 connected to the surface of the glass is fixedly connected to an inner surface of the glass by adhesive. In some embodiments, the bottom plate 3 is adhere to the inner surface of the glass by polyurethane adhesive.

The number and position of the limiting structure 4 and the engaging member 6 correspond to the first fixing portions 21 and the second fixing portions 22 of the component 2. In some embodiments, two limiting structures 4 are provided and symmetrically arranged on the bracket 1. Two engaging members 6 are provided and symmetrically arranged on the bracket 1. The limiting structures 4 and the engaging members 6 cooperatively fix a periphery of the component 2. The symmetrical plane of the two limiting structures 4 symmetrically arranged is the symmetrical plane of the component 2 when the component 2 is mounted to the bracket 1.

The process of mounting the component 2 to the bracket 1 is as follows: the first fixing portion 21 of the component 2 is firstly extended into a groove of the limiting structure 4, and then rotated by a certain angle to enable the second fixing portion 22 to be adjacent to the engaging member 6, until the first fixing portion 21 is rotated in place in the groove and cannot be rotated continuously, the engaging member 6 and the second fixing portion 22 are engaged with each other at the same time. At the same time, a side of the stopping member 5 away from the glass also abuts against the surface of the component 2. Since the direction of at least one component force exerted on the second fixing portion 22 by the engaging member 6 after being engaged with the second fixing portion 22 is opposite to the direction of at least one component force exerted on the component 2 by the stopping member 5, the engaging member 6 and the stopping member 5 can clamp the component 2, so that the overall fixation of the component 2 is achieved.

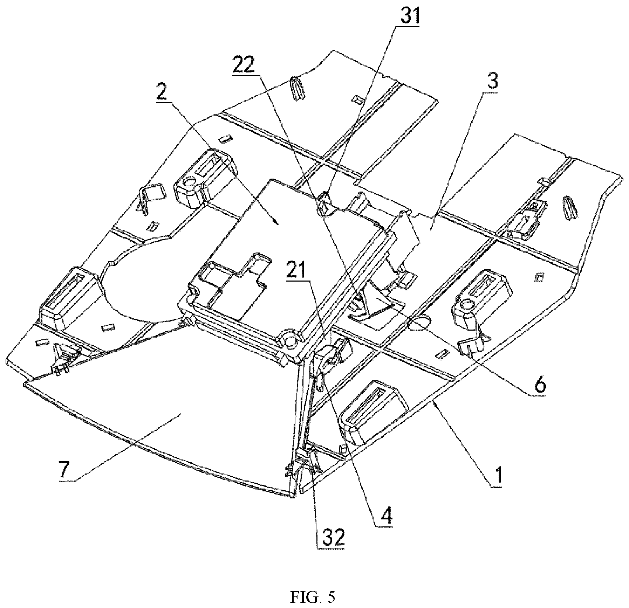

As shown in FIG. 5 to FIG. 7, in some embodiments of the present application, the component 2 is further provided with a signal transceiver 23.

The bottom plate 3 is provided with a signal passage port 34, and the signal transceiver 23 points to the signal passage port 34.

The bracket further includes a light shielding cover 7. The light shielding cover 7 is connected to the bottom plate 3 and covers the signal passage port 34 and the signal transceiver 23. An end of the light shielding cover 7 adjacent to the signal transceiver 23 is located between the optical component 2 and the bottom plate 3.

The signal passage port 34 has an approximately trapezoidal shape, and the signal passage port 34 enables the signal transceiver 23 of the optical component 2 to transmit a signal to the outside and/or receive a signal from the outside through the signal passage port 34. The function of the light shielding cover 7 is to prevent light or signals from other directions from interfering with the signal transceiver 34. The end of the light shielding cover 7 adjacent to the signal transceiver 23 is located between the optical component 2 and the bottom plate 3, so that the light shielding cover 7 can accurately shield the signal transceiver 23 during mounting. Meanwhile, the mounting of the light shielding cover 7 is also limited by a spacing between the optical component 2 and the bottom plate 3, so that if the optical component 2 is mounted in a misaligned position, the light shielding cover 7 cannot be mounted either, thereby improving the mounting accuracy of the bracket assembly 1.

The process of mounting the optical component 2 to the bracket assembly 1 is that the light shielding cover 7 is mounted to the bottom plate 3, and the light shielding cover 7 needs to completely shield the signal passage port 34. Then, the first fixing portion 21 of the optical component 2 is extended into the groove of the limiting structure 4, and then rotated by a certain angle, so that the second fixing portion 22 is adjacent to the engaging member 6, until the first fixing portion 21 is rotated in place in the groove and cannot be rotated continuously, the engaging member 6 and the second fixing portion 22 are engaged with each other at the same time. At the same time, the side of the stopping member 5 away from the glass also abuts against the surface of the optical component 2. Since the direction of at least one component force exerted on the second fixing portion 22 by the engaging member 6 after being engaged with the second fixing portion 22 is opposite to the direction of at least one component force exerted on the optical component 2 by the stopping member 5, the engaging member 6 and the stopping member 5 can clamp the optical component 2, so that the overall fixation of the component 2 is achieved. Meanwhile, the end of the light shielding cover 7 adjacent to the signal transceiver 23 is located between the optical component 2 and the bottom plate 3, so that the signal transceiver 23 is also shielded therein.

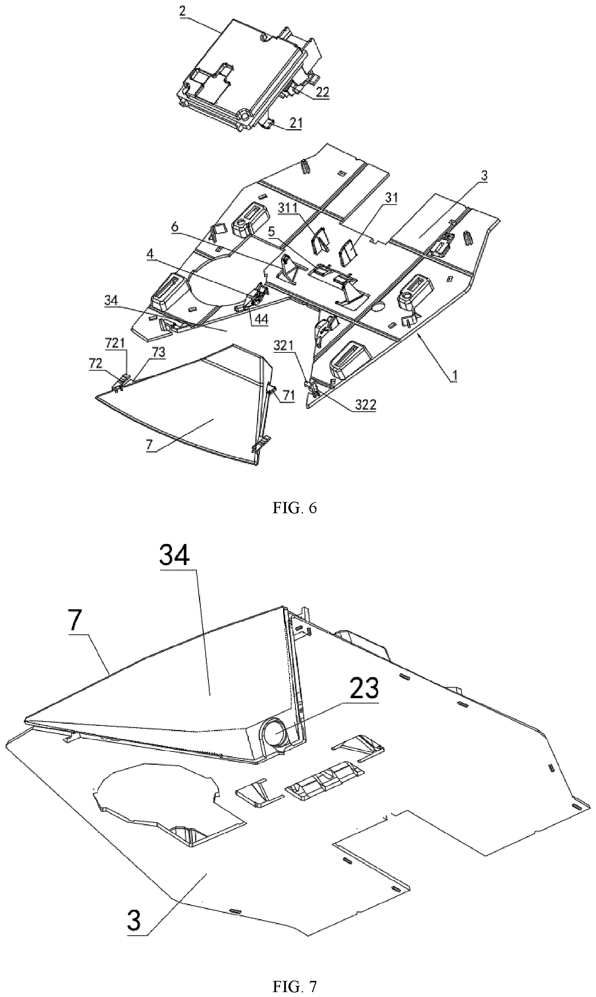

Referring to FIG. 5 and FIG. 6, in some embodiments, the bottom plate 3 is provided with a fool-proof member 31 on a surface away from the glass, and the stopping member 5 and the engaging member 6 are located between the fool-proof member 31 and the limiting structure 4. When the first fixing portion 21 is not engaged in the engaging groove 41, the fool-proof member 31 limits a rotation of the optical component 2, so that the second fixing portion 22 is unable to be engaged with the engaging member 6. In some cases, when the first fixing portion 21 is not completely engaged in the engaging groove 41, the optical component 2 can still be rotated to enable the second fixing portion 22 to be engaged with the engaging member 6. At this time, the optical component 2 is in a pseudo-mounted state, that is, the optical component 2 makes an engaging sound during the assembly process, but is not actually fully engaged. The fool-proof member 31 can better solve the above-mentioned pseudo-mounted situation. Before the first fixing portion 21 of the optical component 2 is engaged in the engaging groove 41 of the limiting structure 4, the optical component 2 is limited by the fool-proof member 31, so that the second fixing structure 22 cannot be engaged with the engaging member 6 before the first fixing portion 21 of the optical component 2 is engaged in the engaging groove 41. When the optical component 2 is mounted, the first fixing portion 21 needs to be extended into the engaging groove 41 first, and then during the rotation of the optical component 2, if the first fixing portion 21 is located at a correct position in the engaging groove 41, the fool-proof member 31 will not limit the optical component 2. Therefore, the fool-proof member 31 can further ensure that the optical component 2 is not mounted in a misaligned position.

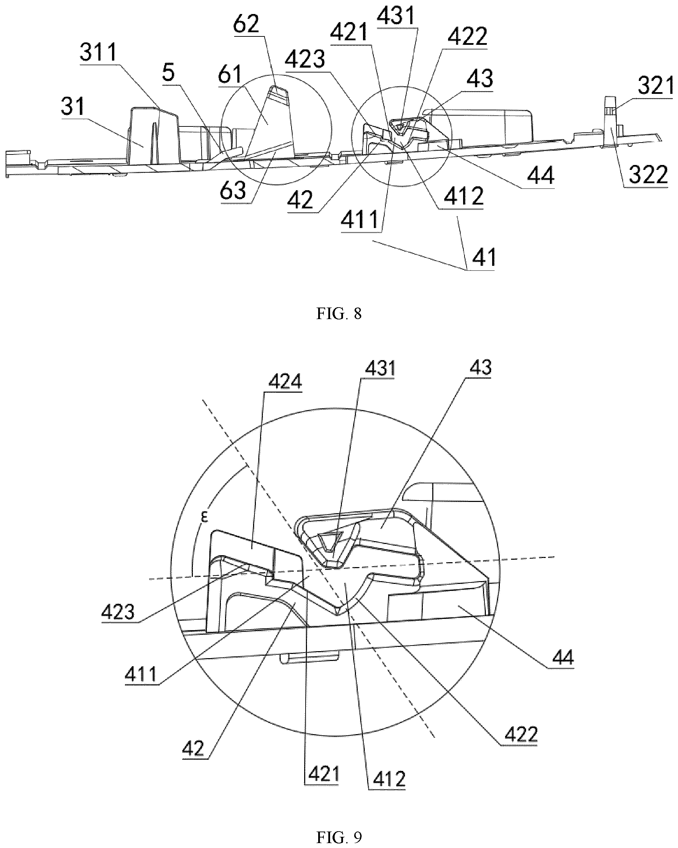

Referring to FIG. 8, in some embodiments, one end of the fool-proof member 31 is fixedly connected to the bottom plate, and the other end of the fool-proof member 31 is provided with a supporting inclined surface 311. The supporting inclined surface 311 is inclined from an end thereof away from the optical component 2 to an end thereof adjacent to the optical component 2. The supporting inclined surface 311 can guide the mounting of the optical component 2. In addition, in some specific embodiments, the fool-proof members 31 are arranged in pairs, and at least one side of the fool-proof member 31 is provided with a support rib for improving the stability thereof.

As shown in FIG. 5 and FIG. 8, the supporting inclined surface 311 is inclined relative to the bottom plate 3, and a distance between the supporting inclined surface 311 and the bottom plate 3 gradually decreases in a direction approaching the limiting structure 4.

Referring to FIG. 5 to FIG. 7, in some embodiments, the light shielding cover 7 is provided with a third fixing portion 71 and a fourth fixing portion 72 that are configure to be fixed to the bracket assembly 1. The limiting structure 4 is provided with a sliding groove 44 located on a side of the limiting structure 4 adjacent to the signal passage port 34. The third fixing portion 71 of the light shielding cover 7 can be inserted into the sliding groove 44. The bottom plate 3 is provided with a buckling structure 32 configure to fix the fourth fixing portion 72. The third fixing portion 71 of the light shielding cover 7 is specifically a block-shaped structure protruding outwardly, and the fourth fixing portion 72 is specifically a beam-shaped structure extending outwardly. At least two third fixing portions 71 are provided and are arranged on opposite sides of the light shielding cover 7, respectively. In some embodiments, two third fixing portions 71 are provided and symmetrically arranged on two sides of the light shielding cover 7. At least two fourth fixing portions 72 are provided and arranged on opposite sides of the light shielding cover 7, respectively. In some embodiments, two fourth fixing portions 72 are provided and symmetrically arranged on two sides of the light shielding cover 7.

Referring to FIG.5, FIG.6 and FIG.8, in some embodiments, the buckling structure 32 includes a buckling suspended arm 321. A gap is provided between the buckling suspended arm 321 and the bottom plate 3. The fourth fixing portion 72 extends from an edge of the light shielding cover 7 toward the gap and extends through the gap. An end of the fourth fixing portion 72 extending through the gap is provided with an engaging protrusion 721. The engaging protrusion 721 is engaged with an edge of the buckling suspended arm 321. When the fourth fixing portion 72 is mounted, the engaging protrusion 721 interferes with the buckling suspended arm 321, so that the fourth fixing portion 72 is bent and pressed into the gap until the engaging protrusion 721 and the buckling suspended arm 321 are stably connected. In addition, the buckling structure 32 further includes a column 322 configured to be connected to the bottom plate 3 and the buckling suspended arm 321. In addition, in some embodiments, the light shielding cover 7 is further provided with a flange 73 at a position adjacent to the fourth fixing portion 72. The flange 73 abuts against the bottom plate 3, so that the force exerted on the fourth fixing portion 72 by the buckling suspended arm 321 and the force exerted on the flange 73 by the bottom plate 3 form a pair of forces in opposite directions, thereby further improving the stability after the light shielding cover 7 is connected to the bottom plate 3.

As shown in FIG. 6, in some embodiments, the bottom plate 3 is provided with two buckling structures 32 configured to fix the two fourth fixing portions 72 respectively. The two buckling structures 32 are located on opposite sides of the light shielding cover 7, respectively. The gaps provided by the two buckling structures 32 are opposite to each other, and the fourth fixing portion 72 can be inserted into the gaps.

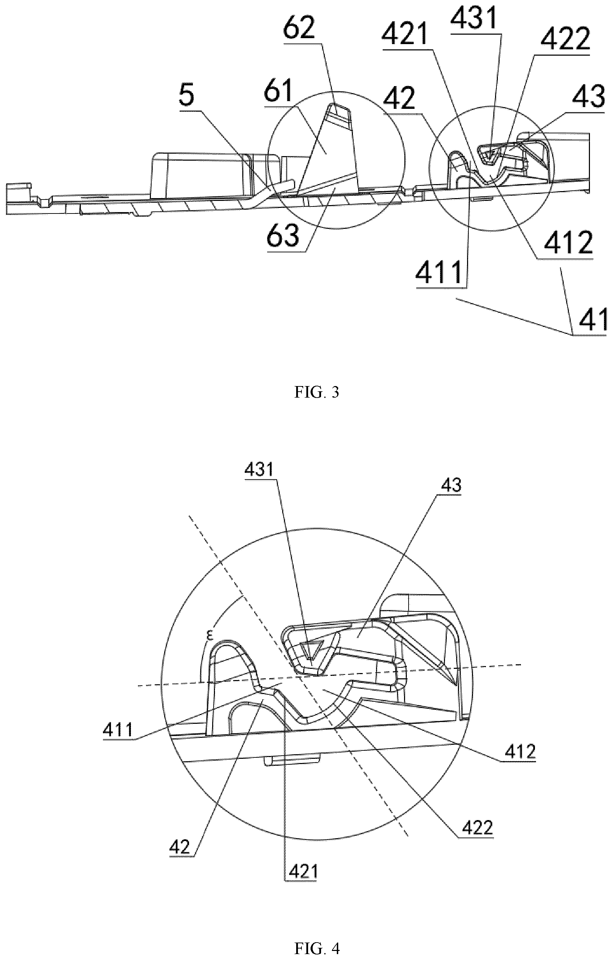

Referring to FIG. 3 and FIG. 4, FIG. 8 and FIG. 9, in some embodiments, the limiting structure 4 further includes a limiting base 42 and a suspending arm 43. One end of the suspending arm 43 is fixedly connected to the bottom plate 3, and the other end of the suspending arm 43 is located above the engaging groove 41. The engaging groove 41 is formed between the limiting base 42 and the suspending arm 43. The limiting base 42 may be a part of the bottom plate 3, or may be a base structure protruding from the bottom plate 3. One end of the suspending arm 43 is fixed, and the other end of the suspending arm 43 is located above the engaging groove 41 and is a supporting end 431. When the first fixing portion 21 rotates in the engaging groove 41, the supporting end 431 of the suspending arm 43 serves as a rotation fulcrum of the first fixing portion 21 to prevent the first fixing portion 21 from separating from the engaging groove 41. When the first fixing portion 21 rotates in place, the suspending arm 43 functions to limit the first fixing portion 21.

Referring to FIG. 4, in some embodiments, the engaging groove 41 includes a pre-locking groove 411 configured to enable the first fixing portion 21 to enter between the suspending arm 43 and the limiting base 42 at a constant angle. The engaging groove 41 further includes a fixing groove 412 configured to enable the first fixing portion 21 to rotate by a certain angle. The pre-locking groove 411 and the fixing groove 412 are in communication with each other. An end of the suspending arm 43 located above the engaging groove 41 is the supporting end 431 protruding toward the engaging groove 41. The limiting base 42 includes a pre-locking inclined surface 421 and a curved surface 422. The pre-locking groove 411 is located between the supporting end 431 and the pre-locking inclined surface 421, and the fixing groove 412 is located between the supporting end 431 and the curved surface 422. The pre-locking groove 411 and the fixing groove 412 may be independent from each other or partially overlapped with each other. The pre-locking groove 411 may enable the first fixing portion 21 to enter between the suspending arm 43 and the limiting base 42 at a constant angle, and the first fixing portion 21 cannot rotate when moving in the pre-locking groove 411, which can prevent the first fixing portion 21 from deflecting during the mounting process and causing the mounting to be skewed.

During mounting, the first fixing portion 21 first enters the pre-locking groove 411, and then rotates relative to the bracket 1 along with the component 2, the first fixing portion 21 gradually enters the fixing groove 412, and finally is located in the fixing groove 412.

Referring to FIG. 9, in some embodiments, the limiting base 42 further includes a pre-locking guide platform 423 located at an entrance of the engaging groove 41, and a step-like drop is formed between an end of the pre-locking guide platform 423 adj acent to the entrance of the engaging groove 41 and the limiting base 42. The pre-locking guide platform 423 can guide the first fixing portion 21 during mounting. Meanwhile, after the first fixing portion 21 moves into the engaging groove 41, the first fixing portion 21 can be limited due to the step-like drop between the pre-locking guide platform 423 and the limiting base 42. In addition, in some embodiments, a side of the pre-locking guide platform 423 is further provided with a limiting side wall 424, and the limiting side wall 424 can facilitate the first fixing portion 21 to be quickly positioned before entering the engaging groove 41.

As shown in FIG. 6 to FIG. 9, in some embodiments, two limiting bases 42 are provided with the pre-locking guide platforms 423. A side of each pre-locking guide platform is provided with the limiting side wall 424, and the two limiting side walls 424 act on the corresponding first fixing portions 21, respectively, so that the two first fixing portions 21 are quickly located between the two limiting side walls 424, thereby quickly positioning the position of the component 2.

Referring to FIG. 4, in some embodiments, the first fixing portion 21 rotates in the engaging groove 41 by an angle range of ε, and 20° ≤ ε ≤ 80°. In some embodiments, a rotation angle of the first fixing portion 21 in the engaging groove 41 is 30° ≤ ε ≤ 60°. Further, the rotation angle of the first fixing portion 21 in the engaging groove 41 may be specifically 30°, 40°, 50°, 60°, etc.

Referring to FIG. 9, in some other embodiments, the first fixing portion 21 rotates in the engaging groove 41 by an angle range of ε, and 10° ≤ ε ≤ 50°. In some embodiments, a rotation angle of the first fixing portion 21 in the engaging groove 41 is 15° ≤ ε ≤ 25°. Further, the rotation angle of the first fixing portion 21 in the engaging groove 41 may be specifically 15°, 20°, 25°, etc.

Referring to FIGS. 2 and 3, in some embodiments, the stopping member 5 is an elastic sheet. In some embodiments, the stopping member 5 specifically includes a supporting platform and a root portion of the stopping member 5 integrally with the supporting platform. The supporting platform can elastically swing relative to the root portion of the stopping member 5, so that when the supporting platform is in contact with a surface of the component 2, the supporting platform can press the component 2 after being elastic deformed, so as to support and fix the component 2. In addition, in some other embodiments, the stopping member 5 is not limited to be a sheet, but may also be a block-shaped or other irregular shape structure. The stopping member 5 needs to ensure that after the component 2 is mounted in place, at least one portion of the stopping member 5 is attached to the component 2 and provides the component 2 with a torque opposite to the rotation direction during mounting, and at the same time, the stopping member 5 cooperates with the engaging member 6 to limit the component 2 to maintain the torque balance, thereby improving the stability when the component 2 is subjected to vibration.

Referring to FIG. 3, in some embodiments, a reinforcing rib 51 is provided at a connecting position between the stopping member 5 and the bottom plate 3. The reinforcing rib 51 is connected between the root of the stopping member 5 and the bottom plate 3 at the same time, and functions to maintain a shape of the supporting platform and share a pressure exerted by the component 2 on the stopping member 5, so as to improve the stability of the component 2 after being fixed and prevent the stopping member 5 from being damaged due to pressure.

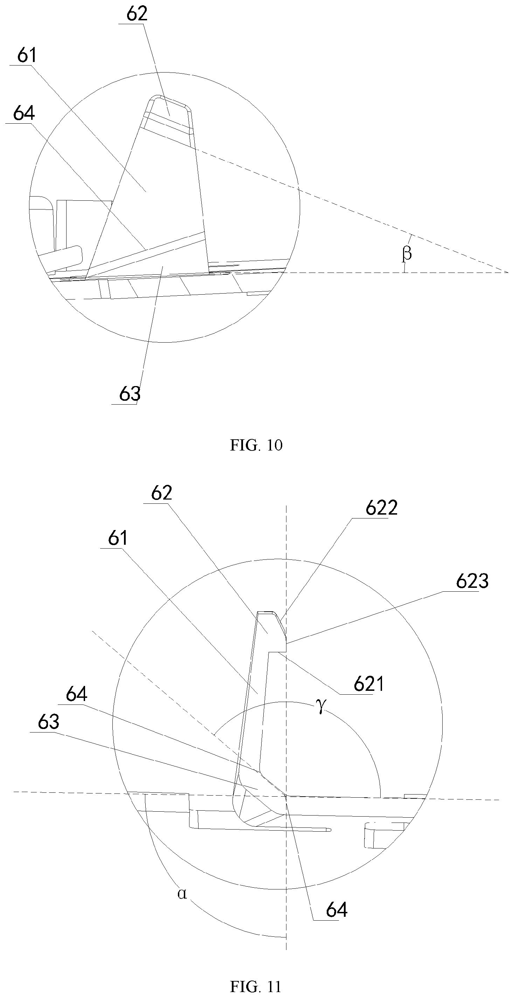

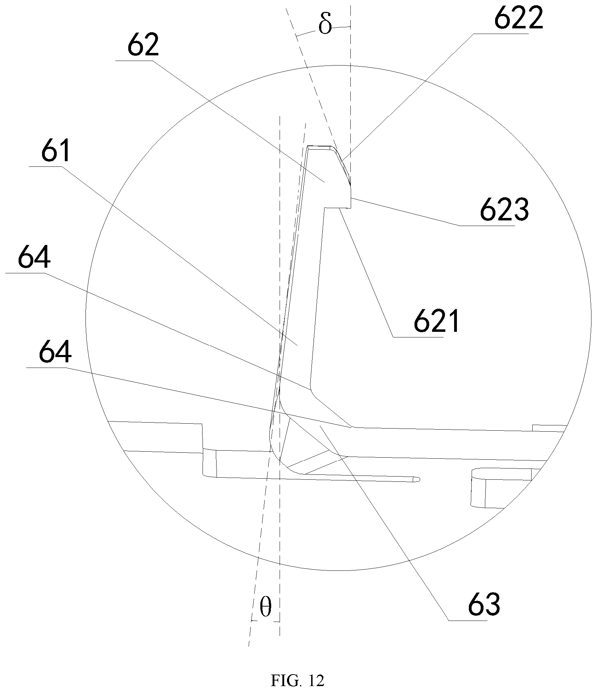

Referring to FIG. 10 to FIG. 12, in some embodiments, the engaging member 6 includes a supporting portion 61 and an engaging portion 62. The supporting portion 61 is connected to the bottom plate 3, and the engaging portion 62 is provided at an end of the supporting portion 61 away from the bottom plate 3. As shown in FIG. 6, when the component 2 is not connected to the bracket 1, an angle formed between the supporting portion 61 and the bottom plate 3 is α, and 70° ≤ α ≤ 100°. In some embodiments, the angle formed between the supporting portion 61 and the bottom plate 3 is 80° ≤ α ≤ 90°. Further, the angle formed between the supporting portion 61 and the bottom plate 3 may be 80°, 83°, 85°, 87°, 90°, etc. The supporting portion 61 and the engaging member 6 are arranged in an L-shape. During an engagement of the engaging member 6 with the second fixing portion 22, the component 2 will first press the engaging member 6 to swing the supporting portion 61. When the engaging member 6 is engaged with the second fixing portion 22 in place, the supporting portion 61 will return to its original position, so that the engaging member 6 and the second fixing portion 22 form a stable connection. As shown in FIG. 12, a swing angle of the supporting portion 61 is θ, and 5° ≤ θ ≤ 30°. Further, the swing angle of the supporting portion 61 is 10°≤ θ≤ 20°.

Referring to FIG. 10 to FIG. 12, in some embodiments, the engaging member 6 further includes an engaging member root portion 63, and the supporting portion 61 is fixedly connected to the bottom plate 3 through the engaging member root portion 63. As shown in FIG. 6, an angle formed between the engaging member root portion 63 and the bottom plate 3 is γ, and 130° ≤ γ ≤180°. In some embodiments, the angle formed between the engaging member root portion 63 and the bottom plate 3 is γ, and 140° ≤ γ ≤ 150°. Further, the angle formed between the engaging member root portion 63 and the bottom plate 3 may be specifically 140 °, 142°, 145°, 148°, 150°, etc. The engaging member root portion 63 can enable the portion 61 to have at least two swing axes 64 when swinging. One swing axis 64 is a connecting position between the engaging member root portion 63 and the bottom plate 3, and the other swing axis 64 is a connecting position between the supporting portion 61 and the engaging member root portion 63. Two swing axes 64 may be parallel to each other, or may form an acute angle of less than 90° with each other. The two swing axes 64 can not only change a swinging direction of the supporting portion 61, but also enable the supporting portion 61 to have better toughness, so as to avoid damage to the supporting portion 61 during the process of being pressed to swing.

Referring to FIG. 10 to FIG. 12, in some embodiments, the engaging portion 62 includes a contacting surface 621, and the contacting surface 621 is in contact with the second fixing portion 22 and exerts a pressure on the second fixing portion 22. As shown in FIG. 10, an angle formed between the contacting surface 621 and the bottom plate 3 is β, and 0° ≤ β ≤ 50°. In some embodiments, the angle formed between the contacting surface 621 and the bottom plate 3 is 20° ≤ β ≤ 40°. Further, the angle formed between the contacting surface 621 and the bottom plate 3 may be 20°, 25°, 30°, 35°, 40°, etc. Since the second fixing portion 22 is engaged with the engaging member 6 during the rotation of the component 2, a certain angle formed between the contacting surface 621 and the bottom plate 3 enables the second fixing portion 22 to be engaged with the engaging member 6 more smoothly.

As shown in FIGS. 8 and 10, in some embodiments, a distance between the contacting surface 621 and the bottom plate 3 gradually decreases in a direction of approaching the limiting structure 4.

Referring to FIG. 11 and FIG. 12, in some embodiments, the engaging portion 62 further includes a first inclined surface 622 and a second inclined surface 623 that are sequentially connected. During the engagement of the engaging member 6 with the second fixing portion 22, the first inclined surface 622 comes into contact with the engaging portion 62 before the second inclined surface 623 comes into contact with the engaging portion 62. As shown in FIG. 12, the first inclined surface 622 has an inclination angle δ with respect to the second inclined surface 623, and 0° ≤ δ ≤ 40°. In some embodiments, the inclination angle of the first inclined surface 622 with respect to the second inclined surface 623 is 20° ≤ δ ≤ 30°. Further, the inclination angle of the first inclined surface 622 with respect to the second inclined surface 623 may be 20°, 22°, 25°, 28°, 30°, etc. During the contact between the engaging portion 62 and the second fixing portion 22, the first inclined surface 622 has a relatively large inclination amplitude, so that when the second fixing portion 22 exerts force on the first inclined surface 622, the first inclined surface 622 will be subjected to an outward horizontal component force, so that the entire engaging member 6 is pressed outwardly, so as to ensure that the second fixing portion 22 can normally move forward until the engaging portion 62 is engaged with the engaging portion 62, and the second inclined surface 623 is more approximated to a vertical state than the first inclined surface 622.

As shown in FIG. 12, in some embodiments, the first inclined surface 622 is inclined with respect to the second inclined surface 623 in a direction away from the second fixing portion 22, and an inclination angle is δ. A distance between the two first inclined surfaces 622 gradually increases in a direction away from the bottom plate 3, so as to guide the second fixing member 22 to be quickly positioned between the two engaging members 6.

Another embodiment of the present application provides a windshield, including the aforementioned bracket 1 for fixing the component 2 on the surface of the glass. The windshield may be a front windshield or a rear windshield. In this embodiment, the windshield is a front windshield. The bracket 1 is fixed to an inner surface of the windshield, and the inner surface is a surface of the windshield adjacent to an inner side of a vehicle body after being mounted to the vehicle body. The component 2 is specifically a camera, and the camera is mounted to a top portion of the windshield through the bracket 1.

The camera includes two first fixing portions 21 symmetrically arranged and two second fixing portions 22 symmetrically arranged. The first fixing portions 21 and the second fixing portions 22 are sheet-like structures protruding outwardly. When the camera is mounted, the bracket 1 needs to be fixed to the windshield by adhesive. Then, the two first fixing portions 21 of the camera are simultaneously inserted into the pre-locking grooves 411 on the bracket 1 at a certain angle with respect to a plane of the bracket 1. When the first fixing portions 21 move into the fixing grooves 412, the whole camera is rotated at a certain angle. At this time, the first fixing portions 21 rotate along the curved surface 422 with the supporting end 431 as a fulcrum until the second fixing portions 22 are engaged with the engaging portions 62 of the engaging members 6. At the same time, the supporting platform of the stopping member 5 is attached to a surface of the camera to improve the stability of the camera after being fixed.

The technical features of the embodiments above may be combined arbitrarily. To make the description concise, not all possible combinations of the technical features in the above embodiments are described. However, as long as there are no contradictions in the combinations of these technical features, all of the combinations should be considered to be within the scope of the specification.

The embodiments above only represent several implementation modes of the present application, and the description thereof is relatively specific and detailed, but it should not be construed as limiting the scope of the patent. It should be noted that for those skilled in the art, various modifications and improvements may be made without departing from the concept of the present application, and all these modifications and improvements belong to the protection scope of the present application. Therefore, the scope of protection of the patent application should be subject to the appended claims.

## Claims

1. A bracket for fixing a component to a surface of a glass, the component being provided with a first fixing portion and a second fixing portion for fixing, the bracket comprising:
a bottom plate, a surface of the bottom plate being configured to be connected to a surface of a glass;
a limiting structure provided on a surface of the bottom plate away from the glass, the limiting structure being provided with an engaging groove, and the first fixing portion being engaged into the engaging groove after being rotated by a certain angle;
a stopping member, one end of the stopping member being connected to the bottom plate, and the other end of the stopping member extending toward a side away from the glass and being configured to abut against a surface of the component; and
an engaging member provided on the surface of the bottom plate away from the glass, wherein the engaging member is engaged with the second fixing portion, and a direction of at least one component force exerted on the second fixing portion by the engaging member after being engaged with the second fixing portion is opposite to a direction of at least one component force exerted on the component by the stopping member.

2. The bracket for fixing the component to the surface of the glass according to claim 1, wherein the limiting structure further comprises a limiting base and a suspending arm, one end of the suspending arm is fixedly connected to the bottom plate, the other end of the suspending arm is located above the engaging groove, and the engaging groove is formed between the limiting base and the suspending arm.

3. The bracket for fixing the component to the surface of the glass according to claim 2, wherein the engaging groove comprises a pre-locking groove configured to enable the first fixing portion to enter between the suspending arm and the limiting base at a constant angle, the engaging groove further comprises a fixing groove configured to enable the first fixing portion to rotate by a certain angle, the pre-locking groove and the fixing groove are in communication with each other, an end of the suspending arm located above the engaging groove is a supporting end protruding toward the engaging groove, the limiting base comprises a pre-locking inclined surface and a curved surface, the pre-locking groove is located between the supporting end and the pre-locking inclined surface, and the fixing groove is located between the supporting end and the curved surface.

4. The bracket for fixing the component to the surface of the glass according to claim 1, wherein the first fixing portion rotates in the engaging groove by an angle range of ε, and 20° ≤ ε ≤ 80°, 10° ≤ ε ≤ 50°, 30° ≤ ε ≤ 60°, or 15° ≤ ε ≤ 25°.

5. The bracket for fixing the component to the surface of the glass according to claim 1, wherein the stopping member is an elastic sheet.

6. The bracket for fixing the component to the surface of the glass according to claim 1, wherein a reinforcing rib is provided at a connecting position between the stopping member and the bottom plate.

7. The bracket for fixing the component to the surface of the glass according to claim 1, wherein the engaging member comprises a supporting portion and an engaging portion, the supporting portion is connected to the bottom plate, the engaging portion is provided at an end of the supporting portion away from the bottom plate, when the component is not connected to the bracket, an angle formed between the supporting portion and the bottom plate is α, and 70° ≤ α ≤ 100°, or 80° ≤ α ≤ 90°.

8. The bracket for fixing the component to the surface of the glass according to claim 7, wherein the supporting portion has at least two swing axes, and at least two swing axes are parallel to each other or form an acute angle of less than 90° with each other.

9. The bracket for fixing the component to the surface of the glass according to claim 7, wherein the supporting portion is pressed to swing by an angle of θ, and 5° ≤ θ ≤ 30°, or 10° ≤ θ ≤ 20°.

10. The bracket for fixing the component to the surface of the glass according to claim 7, wherein the engaging member further comprises an engaging member root portion, the supporting portion is fixedly connected to the bottom plate through the engaging member root portion, an angle formed between the engaging member root portion and the bottom plate is γ, and 130° ≤ γ ≤180°, or 140°≤ γ ≤150°.

11. The bracket for fixing the component to the surface of the glass according to claim 7, wherein the engaging portion comprises a contacting surface, the contacting surface is in contact with the second fixing portion and exerts a pressure on the second fixing portion, an angle formed between the contacting surface and the bottom plate is β, and 0° ≤ β ≤ 50°, or 20° ≤ β ≤ 40°.

12. The bracket for fixing the component to the surface of the glass according to claim 11, wherein the engaging portion further comprises a first inclined surface and a second inclined surface that are sequentially connected, during an engagement of the engaging member with the second fixing portion, the first inclined surface comes into contact with the engaging portion before the second inclined surface comes into contact with the engaging portion, the first inclined surface has an inclination angle δ with respect to the second inclined surface, and 0° ≤ δ ≤ 40° or 20° ≤ δ ≤ 30°.

13. The bracket for fixing the component to the surface of the glass according to any one of claims 1 to 12, wherein the component is further provided with a signal transceiver;
the bottom plate is provided with a signal passage port, and the signal transceiver points to the signal passage port;
the bracket further comprises a light shielding cover, the light shielding cover is connected to the bottom plate and covers the signal passage port and the signal transceiver, and one end of the light shielding cover adjacent to the signal transceiver is located between the component and the bottom plate.

14. The bracket for fixing the component to the surface of the glass according to claim 13, wherein the bottom plate is provided with a fool-proof member on a surface thereof away from the glass, the stopping member and the engaging member are located between the fool-proof member and the limiting structure, and when the first fixing portion is not engaged in the engaging groove, the fool-proof member limits the component from rotating, so that the second fixing portion is unable to be engaged with the engaging member.

15. The bracket for fixing the component to the surface of the glass according to claim 14, wherein one end of the fool-proof member is fixedly connected to the bottom plate, the other end of the fool-proof member is provided with a supporting inclined surface, and the supporting inclined surface is inclined from one end thereof away from the component to an end thereof adjacent to the component.

16. The bracket for fixing the component to the surface of the glass according to claim 13, wherein the light shielding cover is provided with a third fixing portion and a fourth fixing portion that are configure to be fixed to the bracket, the limiting structure is provided with a sliding groove located on a side of the even limiting structure adjacent to the signal passage port, the third fixing portion of the light shielding cover is capable of being inserted into the sliding groove, and the bottom plate is provided with a buckling structure configure to fix the fourth fixing portion.

17. The bracket for fixing the component to the surface of the glass according to claim 16, wherein the buckling structure comprises a buckling suspended arm, a gap is provided between the buckling suspended arm and the bottom plate, the fourth fixing portion extends from an edge of the light shielding cover toward the gap and extends through the gap, an end of the fourth fixing portion extending through the gap is provided with an engaging protrusion, and the engaging protrusion is engaged with an edge of the buckling suspended arm.

18. The bracket for fixing the component to the surface of the glass according to any one of claims 1 to 17, wherein the limiting structure further comprises a pre-locking guide platform located at an entrance of the engaging groove, and a step-like drop is formed between an end of the pre-locking guide platform adjacent to the entrance of the engaging groove and a limiting base.

19. The bracket for fixing the component to the surface of the glass according to claim 18, wherein a side of the pre-locking guide platform is provided with a limiting side wall, and the limiting side wall is capable of facilitating the first fixing portion to enter the engaging groove.

20. A windshield, comprising the bracket for fixing the component to the surface of the glass according to any one of claims 1 to 16.
